# EUROPEAN PATENT SPECIFICATION

(11) **EP 0 462 938 B1**
(45) Date of publication and mention of the grant of the patent: **24.08.1994**
(21) Application number: 91830199.5
(22) Date of filing: 14.05.1991
(51) Int. Cl.: B65G 67/20

(54) **A system for loading trucks or containers automatically or semiautomatically with freight units of palletizable or at least regular shape and size**
System zum automatischen oder halbautomatischen Beladen von Transportwagen oder Behältern mit Frachteinheiten von palettisierbarer oder wenigstens regelmässiger Forme und Grösse
Système pour le chargement automatique ou semi-automatique de camions ou de conteneurs avec unités de fret de forme et de dimensions palettisables ou au moins régulières

(30) Priority: 18.06.1990 IT 4251890
(43) Date of publication of application: 27.12.1991
(73) Proprietor: THS Technologies for Handling and Storaging S.r.l., I-43100 Parma (IT)
(72) Inventor: Ghiretti, Giorgio, I-43023 Monticelli Terme(Parma) (IT)
(74) Representative: Lanzoni, Luciano

(56) References cited:
- EP-A- 0 299 912
- FR-A- 2 396 711
- FR-A- 2 584 685
- GB-A- 2 201 938
- US-A- 3 337 066
- US-A- 3 620 391
- US-A- 3 727 777

## Description

The invention relates to a system for loading and unloading freight units into and from trucks or containers, automatically or semiautomatically.

The loading of trucks, in particular those vehicles having an enclosed body with rear access doors, or of freight containers, is still widely non automatic or at best a semiautomatic operation.

In most cases, the items for loading, or "freight units" are palletized, i.e. arranged on pallets constructed to standard international dimensions (ISO) which take account of conventional truck body or container sizes and thus permit of exploiting available space internally of the enclosure.

The freight units for palletization must in their turn be crated, boxed or wrapped to modular base dimensions in order to avoid wasting pallet space.

The 400x600 mm module prescribed by ISO, with its multiples and sub-multiples, provides one such standard packing dimension for unified pallets.

In other instances, the freight units may not be palletized but nonetheless will be of standard shape and dimensions equally able to ensure a full exploitation of available loading space.

Where the loading operation is not entirely manual, the material may be winched on board by means of wire ropes installed in the enclosure of the truck body, or alternatively, conveyed into the body on inflatable rollers.

These semiautomatic loading systems constitute an integral part of the truck, in the sense that they are mounted permanently to the vehicle.

There is in any event a specific labour requirement accompanying such systems, inasmuch as the material must be attached to or positioned on the winching or conveying means in question, and the loading operation manned and supervised throughout.

Thus, one of the drawbacks of such loading systems is reflected in their reliance on the availability of manpower.

Where labour may be in short supply, or completely lacking due to strike action or as the result of other contingencies, vehicle loading operations can in fact be rendered lengthy and difficult, if not altogether impossible.

A further drawback resulting from the permanent inboard installation of such conventional winch or roller loading systems is that one has a reduction in available loading space, or at least in the maximum carrying capacity of the vehicle, and a consequent increase in the unit cost of carriage.

US-A-3 337 066 which represents the prior art on which the preamble of claim 1 is based discloses a vehicle loading and unloading system comprising a series of conveyors and complex means to elevate the loading structure.

It does not disclose means by which the system is displaceably in a desired angle position with respect to the position of a truck.

EP-A-0 299 912 describes a loading/unloading structure having external loading means.

US-A-3 620 391 shows a rail car which adapts its position to that one of the pallet to be loaded but which is unable to adapt the position of the pallet to that one of the truck.

The object of the present invention is to automatically or semiautomatically permit loading and unloading of freight units into or from truck bodies or freight containers said freight units being conveyed directly from a storage location to the loading system or vice versa.

A further object of the invention is to permit of loading and unloading of vehicles which are not equipped with any such loading/unloading system on board.

Another object of the invention is to optimize loading and unloading of a truck or container by exploiting its entire volume and carrying capacity, and thus to enable a reduction in the unit cost of carriage.

The stated objects are fully achieved by the provision of a system which is characterized by the features of claim 1.

The invention will now be described in detail, by way of example, with the aid of the accompanying drawings, in which:

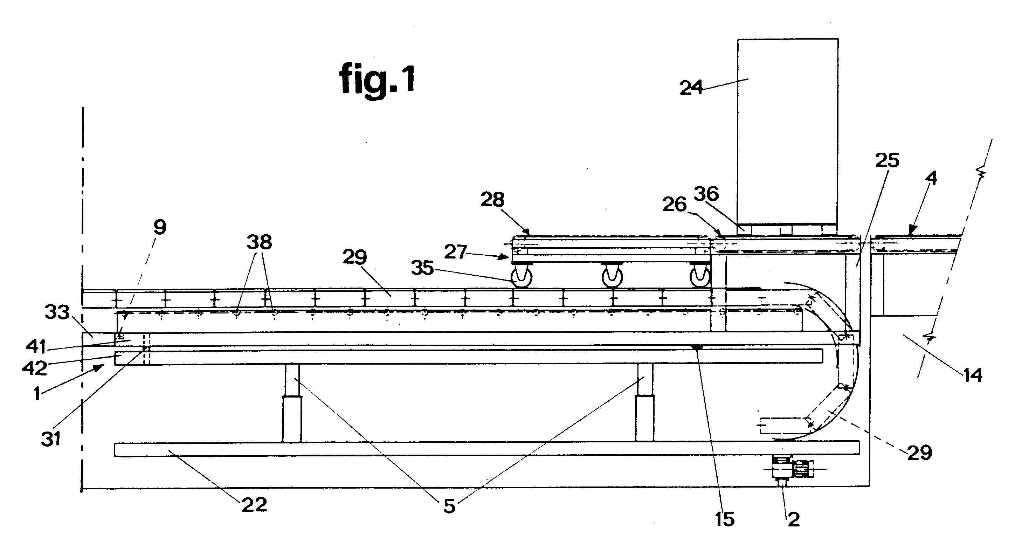

- fig 1 illustrates one part of the loading/unloading system in side elevation;

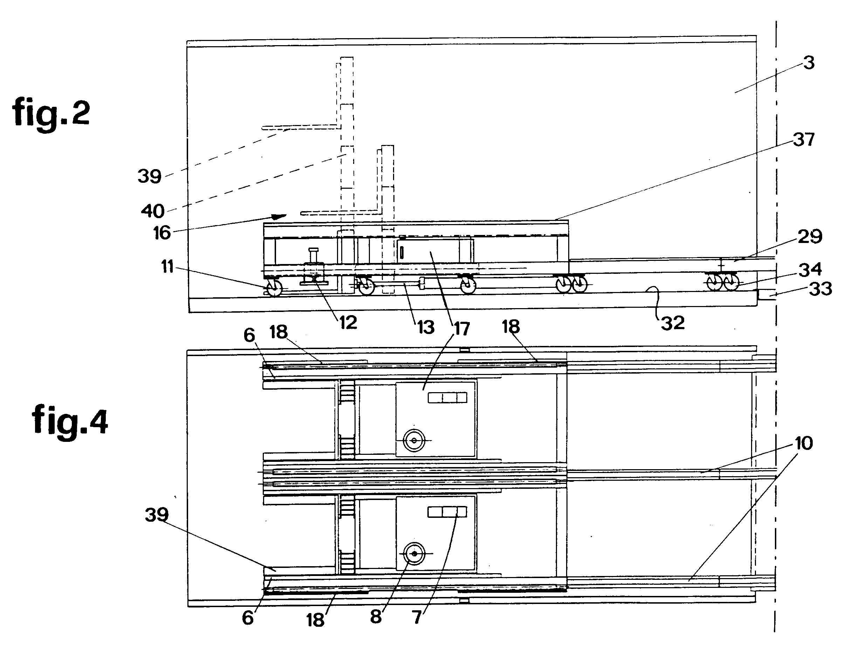

- fig 2 shows a part of the loading/unloading system designed to enter the enclosure of a truck or container, seen in side elevation;

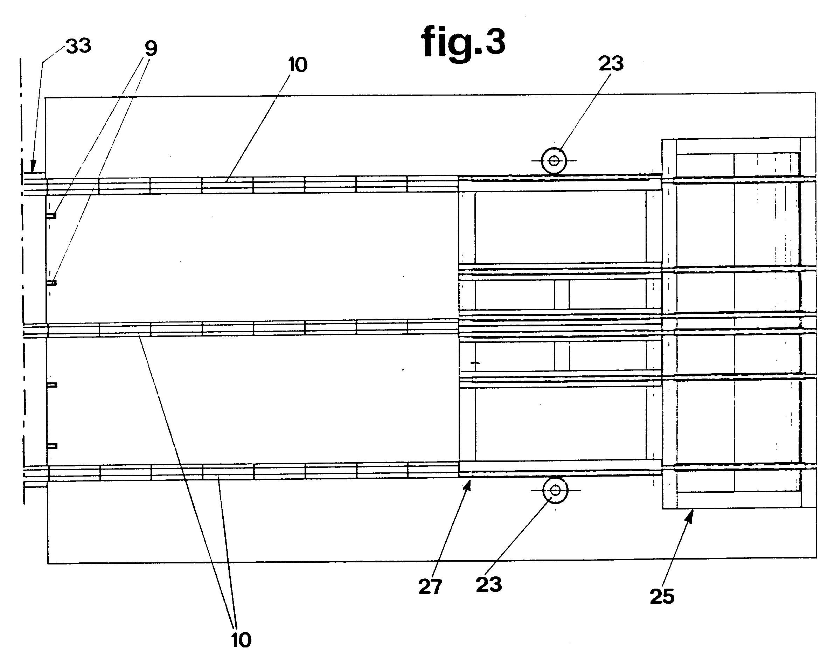

- fig 3 is a plan view of the part of the system illustrated in fig 1;
- fig 4 is a plan view of the part of the system illustrated in fig 2;
- fig 5 is an elevation of the loading/unloading system viewed along the direction through which freight units are transferred into the enclosure;
- fig 6 is a block diagram showing means by which to establish the position of the platform in relation to the threshold of the loading enclosure.

Referring to the drawings, 1 denotes a platform, in its entirety, comprising an upper platform 41 and a lower platform 42 both supported by a frame 22.

The lower platform 42, hence the upper platform 41 also, is adjustable in height and angle by means of four hydraulic cylinders 5 capable of operation independently of one another in such a way that the platform can be raised and lowered either parallel with the plane currently occupied or inclined in relation thereto.

The upper platform 41 is mounted on power driven wheels or thrust bearings 15, and rotatable thus within the plane currently occupied, the angular movement about a pivot 31 produced by an actuator (not illustrated), said pivot extending the platform at a central point near to one end; the end in question is that which in operation will be offered to the threshold of the load enclosure 3 of a truck body or container.

The hydraulic cylinders 5 constitute platform position adjusting means to adjust the height and angle position of said platform with respect to a horizontal plane.

2 denotes a plurality of power driven wheels that permit traversing the platform and the frame in a direction substantially at right angles with respect to the longitudinal axis of the platform, parallel with an elevated loading kerb 14 to which freight units 24 of materials or merchandise destined for shipment are brought directly from a storage location by a conveyor 4 of conventional embodiment.

The power driven wheels 2, the thrust bearings 15 and the pivot 31 together constitute platform position adjusting means by which the platform is laterally aligned with respect to the threshold of the platform or the enclosure 3 of a truck body or container to be loaded.

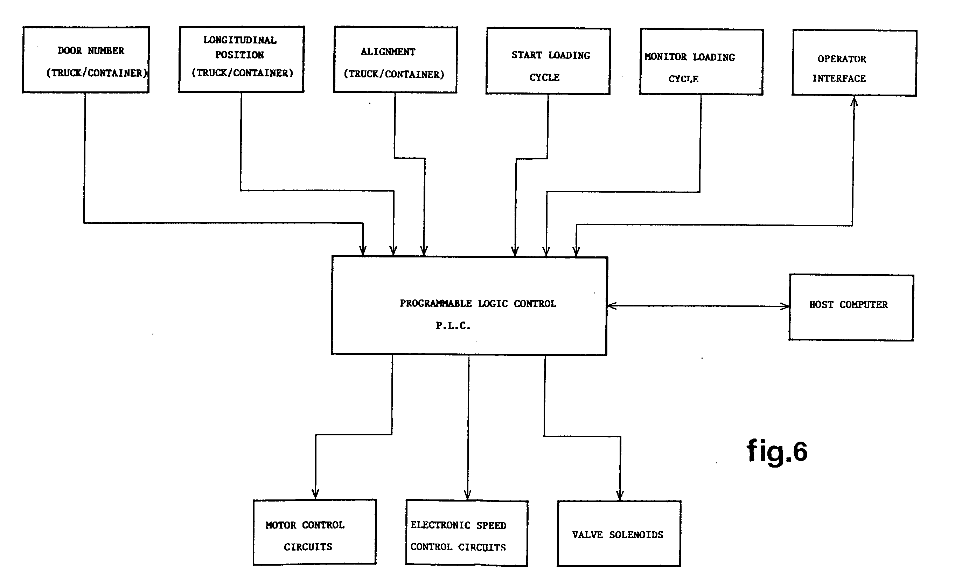

Some of the platform position adjusting means, schematically illustrated in the block diagram of fig 6, are designed to establish the exact position of the platform in relation to the door of the enclosure 3. Such means consist in a processor or computer, provided with a programmable logic control unit, or PLC.

The PLC affords a plurality of inputs in receipt of the signals from corresponding sensors serving to verify: the door number, i.e. the number of the truck (or container) to be loaded; the longitudinal position of the truck; the alignment of the platform and the truck; the start configuration of the loading cycle; and the progress of the cycle.

The various input signals (fig 6) are processed by software used in conjunction with the PLC to run the system, in such a way as to provide a plurality of output signals for monitoring and controlling the operation of motors, of speed control circuits, and of a number of solenoid valves 7.

The system also affords an interface between the PLC and an operator, constituting means to program the logic unit and to monitor the progress of loading cycles.

29 denotes an access chain mounted to and capable of running along the platform 1 on a plurality of rollers 38, of which the underside is fitted with wheels or casters 34 destined to roll on the load deck 32 of the enclosure 3.

33 denotes a bridging piece or flap provided to connect the upper platform 41, and more exactly a plurality of guide rails 10 supported by the platform, with the threshold of the deck 32; the flap 33 is pivotably attached to one end of the upper platform 41 by means of hinges 9.

The platform is provided with a rigidly associated fixed support 25 accommodating one or more freight units 24, on pallets 36 in the example illustrated, to be loaded into the enclosure 3.

The fixed support 25 is equipped uppermost with a chain or roller conveyor 26 by which the freight units 24 brought from the storage location are transferred onto a trolley, or shuttle 27, equipped in turn with a second chain or roller conveyor 28 of the type carried by the fixed support 25.

The trolley 27 is fitted on the underside with wheels 35 positioned to run on the guide rails 10 afforded by the platform, and propelled thus by a corresponding motor (not shown) connected to a power supply point at the fixed support; the purpose of the trolley 27 is to transfer the load units from the fixed support 25 to a table denoted 37.

23 denotes one of two wheels driven by respective motors 30, the function of which is to displace the chain 29 along the path followed by the freight units 24 into the enclosure 3.

The chain 29, the rollers 38 and the casters 34, together with first conveyor 26, the trolley 27, the second conveyor 28, the wheels 35 and the guide rails 10, provide a load transfer carriage carrying the freight units 24 into and from the enclosure of a truck body or a container.

The system further comprises one or more hydraulic fork lifts 16, the forks 39 of which are vertically slidable on respective uprights 40, positioned at the end of the chain 29 which is designed to enter the enclosure 3 of the truck body or container; the lifts are carried by the casters 34 of the chain 29 and by a pair of leading casters 11, and serve to collect units 24 from the table 37 and arrange and stack them in the enclosure 3.

Each hydraulic fork lift 16 comprises a hydraulic stabilizer cylinder 12 that descends onto the load deck 32 of the truck or container once the lift is in a precise operating position internally of the enclosure, and a traverse cylinder 13 serving to produce the longitudinal extending and retracting movement necessary to the arranging and stacking operation. The lifts 16 traverse on lateral guides denoted 6.

17 denotes a hydraulic power pack, in its entirety, fitted to each hydraulic lift 16 and comprising a pump 8 and a bank of solenoid valves 7.

The hydraulic lifts 16 with their forks 39 and uprights 40, the lateral guides 6 and the hydraulic cylinders 12 and 13 together constitute means for arranging and stacking units 24 in the truck or container; such means are designed to enter the enclosure 3 together with the chain 29, carried along the load deck 32 by the casters 34.

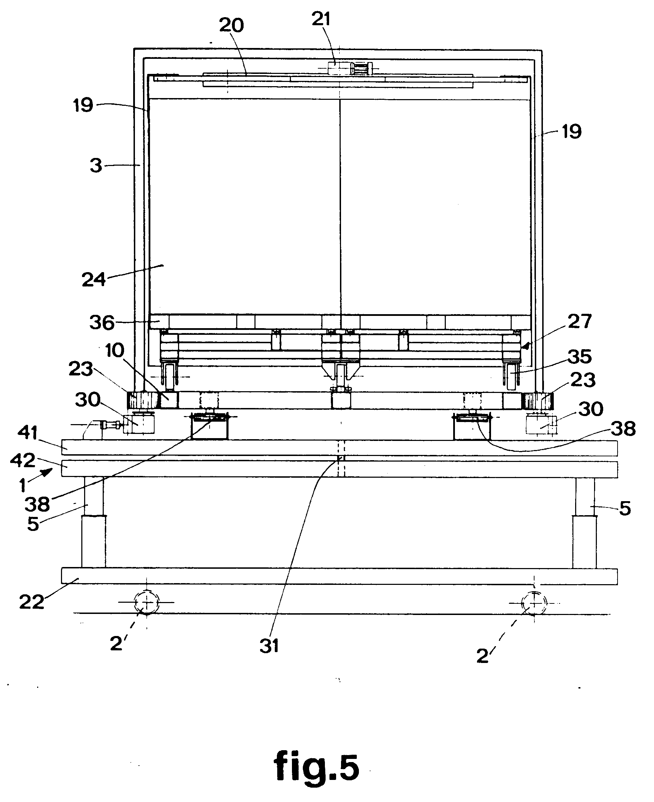

Referring to fig 5 of the drawings, 19 denotes a pair of restraints 21 associated with a rack 20 driven by a geared motor 21, by which the freight units 24 are engaged from either side and thus kept within the standard dimensional limits prescribed for the loading enclosure 3.

The restraints 19 might be incorporated into the arranging and stacking means aforementioned, or alternatively, associated rigidly with the trolley.

The means by which freight units 24 are arranged and stacked inside the enclosure 3 will include sensors (not illustrated) that serve to establish the position of the means themselves during their passage forward into the truck or container, and in particular to sense their distance from the side walls of the enclosure 3.

In the event that the distance in question exceeds a given maximum permissible limit, the forward movement of the arranging and stacking means will be inhibited and their alignment then corrected automatically with the aid of a plurality of rubber buffers 18, which favour the rotation of the upper platform 41 about the pivot 31 and thus enable fine positioning of the loading system in relation to the enclosure.

In the example described and illustrated, reference is made to pallets or units having 800x1200 mm base dimensions (a size widely adopted in practice).

Thus, if the units 24 are introduced sideways-on with their longer sides parallel to the door of the enclosure 3, the load will consist in two parallel columns, and if lengthwise, three parallel columns. As regards operation of the system, the successive loading steps may be summarized thus:
- the position, height and angle of the platform 1 are adjusted automatically, also the line of entry into the truck or container, in order to ensure a faultless alignment of the platform with respect to the threshold of the enclosure;
- the flap 33 is rotated about its hinges 9 and thus lowered onto the load deck 32;
- the chain 29 and the arranging and stacking means are manoeuvred into the enclosure 3;
- units 24 to be arranged and stacked are manoeuvred by the first chain or roller conveyor 26 onto the trolley 17, which passes along the chain 29 until in contact with the table 37, whereupon the units run on to the table and are held from either side by the restraints 19;
- the units 24 are collected from the table 37 by the arranging and stacking means and positioned in the enclosure (for a two-high stack, other units will be taken from the table and positioned on top of the first); during this step, the trolley 27 returns to the kerb 14 and repositions in readiness to receive further units 24 from the conveyor 26 of the fixed support 25;
- the chain 29 retracts through a distance of 800 mm approx (or 1200 mm in the case of a three-column load, effected by introducing the units lengthwise, i.e. with shorter sides parallel to the threshold of the enclosure), which is substantially equal to the longitudinal depth of the enclosure loaded thus far.

In an alternative embodiment of the system, the shuttle between the fixed support and the hydraulic lifts, i.e. the trolley 27, might be discarded, in which case the arranging and stacking means will themselves perform the shuttle, returning after each stacking step to collect further load units from the fixed support. Whilst the outlay on this alternative system is certainly lower, the loading operation will take longer.

Options exist for other variations in embodiment that favour lower outlay over operating speed; for example, systems designed for single level loading (i.e. no stacking of units one on top of another), or semi-automatic systems with a less sophisticated electronic alignment facility, requiring an element (albeit limited) of manpower.

## Claims

1. A system for loading and unloading freight units of palletizable or at least regular shape and size into and from trucks or containers, automatically or semiautomatically, comprising:
- a platform (1) offering support for a load transfer carriage carrying the freight unit (24) into and from the enclosure (3) of a truck body or a container;
- platform position adjusting means (5) to adjust the height and angle position of said platform with respect to a horizontal plane, and to laterally align said platform with respect to the threshold of said truck loading platform or said container;
- means for arranging and stacking/destacking the freight units (24) inside the enclosure (3),
characterized
in that said load transfer carriage comprises:
- a chain (29) which is displaceable on a plurality of rollers (38) supported by said platform (1), and fitted on the underside with casters (34) designed to pass along the load deck (32) of the enclosure, by which the means for arranging and stacking the freight units are carried into or from the enclosure;
- a first chain or roller conveyer (26) by which the units (24) are collected from a kerb (14) or are discharged onto said kerb;
- a trolley (27) equipped with a second chain or roller conveyor (28), mounted to a plurality of wheels (35) running on guide rails (10) supported by the chain (29), by which said freight units are collected from the first conveyor (26) and transferred to a table (37) or are discharged from said table in the opposite direction.

2. A system as defined in claim 1, characterized in that the platform (1) is provided with a fixed support (25) accomodating at least a freight unit (24), said fixed support being equipped uppermost with said first chain or roller conveyor (26).

3. A system as defined in the preceding claims, wherein each freight unit (24) to be loaded or unloaded is held between a pair of sheet metal restraints (19) operated by a geared motor (21) acting on a rack (20), said restraints (19) maintaining the overall dimensions of the unit within the limits prescribed for a given enclosure.

4. A system as defined in claim 1, wherein the load transfer carriage further comprises:
- at least one hydraulic lift (16) equipped with forks (39) for lifting and positioning the freight units (24), said hydraulic lift being associated with said chain (29) to be moveable into and from the enclosure (3) in order to collect or deposit said freight units from or onto said kerb (14).

5. A system as defined in claim 1, wherein the platform position adjusting means and the means for arranging and stacking the freight units (24) inside the enclosure (3) comprise a processor provided with a PLC (Programmable Logic Control) affording a plurality of inputs in receipts of signals denoting: door number, i.e. the number of the truck or container enclosure to be loaded; the longitudinal position of the enclosure; the alignment of the loading system and the enclosure; the start configuration and the subsequent progress of the load cycle, said signals being processed in such a way to obtain output signals suitable for monitoring and controlling the operation of a plurality of motors, for the regulating the motor speeds, and for piloting the operation of solenoid valves (7) associated with one or more hydraulic power packs (17) producing the movement of said at least one hydraulic lift (16).

6. A system as defined in claim 1, wherein said platform position adjusting means comprises a plurality of hydraulic cylinders (5) which operate independently of one another, said hydraulic cylinders raising or lowering said platform parallel to the plane currently occupied and inclined in relation thereto.

7. A system as defined in claim 1, wherein said platform position adjusting means comprises:
- a plurality of power driven wheels (2) serving to traverse the platform parallel with respect to the position of said kerb (14);
- a plurality of wheels or thrust bearings (15) and an actuator, by which an upper platform (41) is caused to rotate with respect to said platform (1) about a pivot (31) passing through said platforms (1,41) in a central position near to the end offered to the threshold of the enclosure.

8. A system as defined in claim 1, further comprising a bridging piece (33) which is rotatable on hinges (9), said bridging means connecting an upper platform (41) with the threshold of the load deck (32) of the enclosure (3).

9. A system as defined in claim 1, wherein said means for arranging and stacking the freight units (24) inside of the load enclosure (3) of a truck or container comprises at least one hydraulic lift (16) mounted on casters (34), at least one corresponding set of forks (39) capable of vertical movement on upright supports (40) and serving to pick up and position said freight units, a first hydraulic cylinder (12) serving to stabilize the lift (16), and a second hydraulic cylinder (13) to position the lift.

10. A system as defined in the preceding claims, wherein the chain (29) is freely supported by the rollers (38) and set in motion by a pair of motors (30) through a corresponding pair of drive wheels (23) to reciprocatively displace said chain in opposite longitudinal directions.

## Patentansprüche

1. Ein System zum automatischen oder halbautomatischen Beladen und Entladen von Transportwagen oder Behältern mit Frachteinheiten von palettisierbarer oder wenigstens regelmäßiger Form und Größe, welches aufweist:
- eine Rampe (1), die eine Stützfläche für die Frachtumladevorrichtung bildet und die Frachteinheit (24) in das und aus dem Gehäuse (3) des Transportwagens oder Behälters fördert;
- eine Vorrichtung (5) zur Einstellung der Höhe und der Neigung der genannten Rampe gegenüber der horizontalen Ebene und zur seitlichen Ausrichtung der genannten Rampe hinsichtlich der Schwelle der Laderampe des genannten Transportwagens oder des genannten Behälters;
- eine Vorrichtung zum Stapeln und Abstapeln der Frachteinheiten (24) im Innern des Gehäuses (3),
dadurch gekennzeichnet, daß die genannte Frachtumladevorrichtung aufweist:
- eine Kette (29), die auf einer Vielzahl von von der genannten Rampe (1) gehaltenen Rollen (38) verlegt werden kann, die auf der Unterseite Gleitrollen (34) aufweist, die entlang der Ladefläche (32) des Gehäuses vorbeiläuft und durch die die Vorrichtung zum Anordnen und Stapeln der Frachteinheiten in das und aus dem Gehäuse gebracht wird;
- ein erster Ketten- oder Rollenförderer (26), durch den die Einheiten (24) von einer Bordkante (14) gesammelt oder auf die genannte Bordkante abgeladen werden;
- ein mit einem zweiten Ketten- oder Rollenförderer (28) ausgestatteter Förderwagen (27), der auf eine Vielzahl von Rädern (35) montiert ist, die auf von der Kette (29) gehaltenen Führungsschienen (10) laufen und durch die die genannten Frachteinheiten von dem ersten Förderer (26) gesammelt und zu einem Tisch (37) geführt werden oder durch die sie von dem genannten Tisch in der umgekehrten Richtung abgeladen werden.

2. Ein System gemäß Anspruch 1, dadurch gekennzeichnet, daß die Rampe (1) eine befestigte Stützfläche (25) aufweist, die zumindest eine Frachteinheit (24) aufnimmt, wobei die genannte Stützfläche ganz oben mit dem genannten ersten Ketten- oder Rollenförderer (26) ausgestattet ist.

3. Ein System gemäß den vorausgehenden Ansprüchen, wobei jede zu ladende oder abzuladende Frachteinheit (24) zwischen einem Paar von Blechrückhaltern (19) gehalten wird, die von einem Getriebemotor (21) betrieben werden, der auf eine Zahnstange (20) wirkt, wobei die genannten Rückhalter (19) die Gesamtabmessungen der Einheiten in den für das gegebene Gehäuse festgesetzten Grenzen halten.

4. Ein System gemäß Anspruch 1, wobei die Frachtumladevorrichtung außerdem aufweist:
- zumindest einen hydraulischen Heber (16), der mit Gabeln (39) zum Heben und Positionieren der Frachteinheiten (24) ausgestattet ist, wobei der genannte hydraulische Heber mit der genannten Kette (29) verbunden ist, um in das und aus dem Gehäuse bewegt werden zu können, um die genannten Frachteinheiten von der genannten Bordkante (14) zu sammeln oder aber auf sie abzusetzen.

5. Ein System gemäß dem Anspruch 1, wobei die Vorrichtung zur Einstellung der Rampe und die Vorrichtung zur Anordnung und zum Stapeln der Frachteinheiten (24) im Innern des Gehäuses (3) einen SPS-Prozessor (Speicherprogrammierbare Steuerung) aufweist, der eine Vielzahl von Signaleingängen erlaubt für: Türnummer, z. B. die Nummer des zu beladenden Transportwagen- oder Behältergehäuses; die Längsposition des Gehäuses; die Ausrichtung des Ladesystems und des Gehäuses; die Startkonfiguration und der nachfolgende Ablauf des Ladezyklusses, wobei die genannten Signale derart verarbeitet werden, daß sie Überwachung und Steuerung der Arbeit einer Vielzahl von Motoren, die Regulierung der Motorengeschwindigkeiten und die Steuerung der Arbeitsweise der Solenoidventile (7) erlauben, die mit einer oder mehreren hydraulischen Versorgungseinheiten (17) verbunden sind und die Bewegung des genannten, zumindest einen hydraulischen Hebers (16) erzeugen.

6. Ein System gemäß Anspruch 1, wobei die genannte Vorrichtung zur Einstellung der Rampe eine Vielzahl von hydraulischen Zylindern (5) aufweist, die voneinander unabhängig arbeiten und die die Rampe parallel zu der augenblicklichen eingenommenen Ebene und diesbezüglich geneigt anheben und absenken.

7. Ein System gemäß Anspruch 1, wobei die genannte Vorrichtungen zur Einstellung der Rampe aufweist:
- eine Vielzahl von angetriebenen Rädern (2), die zur Verschiebung der Rampe gegenüber der Stellung der genannten Bordkante (14) dienen;
- eine Vielzahl von Rädern oder Axiallagern (15) und ein Stellglied, wodurch eine obere Rampe (41) um einen Drehzapfen (31), der in der Mitte am der Bordkante des Gehäuses zugewendeten Ende durch die genannten Rampen (1, 41) führt, gegenüber der genannten Rampe (1) gedreht wird.

8. Ein System gemäß Anspruch 1, das außerdem Brückenelement aufweist (33), das um Gelenke (9) drehbar ist, wobei diese Brückenvorrichtung eine obere Rampe (41) mit der Bordkante der Ladefläche (32) des Gehäuses verbindet.

9. Ein System gemäß Anspruch 1, wobei die genannte Vorrichtung zum Anordnen und zum Stapeln der Frachteinheiten (24) im Innern des Ladegehäuses (3) eines Transportwagens und Behälters zumindest einen auf Gleitrollen (34) montierten hydraulischen Heber (16), zumindest ein entsprechendes Gabelpaar (39) zur vertikalen Bewegung auf aufrechten Halterungen (40) zur Aufnahme und Positionierung der genannten Frachteinheiten, einen ersten hydraulischen Zylinder (12) zur Stabilisierung des Hebers (16) und einen zweiten hydraulischen Zylinder (13) zur Positionierung des Hebers umfaßt.

10. Ein System gemäß den vorausgehenden Ansprüchen, wobei die Kette (29) von den Rollen (38) frei gehalten und durch ein Motorenpaar (38) über ein entsprechendes Paar Antriebsräder (23) angetrieben wird, um die genannte Kette in entgegengesetzter Längsrichtung hin- und her zu verlegen.

## Revendications

1. Un système pour le chargement automatique ou semi-automatique de camions ou de conteneurs avec unités de fret de forme et de dimensions palettisables ou au moins régulières, qui comprend:
- une plate-forme (1) qui présente un support pour le transport de transfert des charges qui transporte l'unité de fret (34) à l'intérieur et en dehors de l'enceinte (3) d'un corps de camion ou d'un conteneur;
- des moyens (5) d'ajustement de la position de la plate-forme pour ajuster la position de la hauteur et de l'angle de ladite plate-forme par rapport au plan horizontal, et pour aligner latéralement ladite plate-forme par rapport au seuil de ladite plate-forme de chargement du camion ou dudit conteneur;
- des moyens pour ranger et pour empiler et désempiler les unités de fret (24) à l'intérieur de l'enceinte (3),
caractérisé
en ce fait que ledit transport de transfert des charges comprend:
- une chaîne (29) qui peut être déplacée sur une pluralité rouleaux (38) supportés par ladite plate-forme (1), et qui est adaptée dessous avec des galets (34) destinés à passer le long du pont de chargement (32) de l'enceinte, par laquelle les moyens pour ranger et pour empiler les unités de fret sont tranportés à l'intérieur ou en dehors de l'enceinte;
- une première chaîne ou un transporteur à rouleaux par laquelle les unités de fret (24) sont ramassées à partir d'un bord de trottoir (14) ou déchargées sur ledit bord de trottoir;
- un chariot (27) équipé d'une deuxième chaîne ou d'un transporteur à rouleaux (28), monté sur une pluralité de roues (35) qui roulent sur des rails qui les guident (10) supportés par la chaîne (29), par lequel lesdites unités de fret sont ramassées à partir du premier transporteur (26) et transférées vers une table (37) ou sont déchargées de ladite table dans la direction opposée.

2. Un système comme celui défini dans la revendication 1, caractérisé en ce fait que la plate-forme (1) est munie d'un support fixe (25) qui reçoit au moins une unité de fret (24), ledit support fixe étant monté au-dessus de ladite première chaîne ou du transporteur à rouleaux (26).

3. Un système comme celui défini dans les revendications précédentes, dans lequel chaque unité de fret (24) qui doit être chargée ou déchargée est contenue entre une paire d'entraves (19) en plaques de métal qui sont actionnées par un moteur engrené (21) qui fonctionne sur une crémaillère (20), lesdites entraves (19) maintenant les dimensions totales de l'unité dans les limites prescrites pour une enceinte donnée.

4. Un système comme celui défini dans la revendication 1, dans lequel le transport de transfert des charges comprend en plus:
- au moins un élévateur hydraulique (16) équipé de fourches (39) pour soulever et pour positionner les unités de fret (24), ledit élévateur hydraulique étant associé avec ladite chaîne (29) pour qu'il puisse être déplacé vers l'enceinte (3) ou à partir de celle-ci afin de ramasser lesdites unités de fret à partir dudit bord de trottoir (14) ou de les déposer sur ce dernier.

5. Un système comme celui défini dans la revendication 1, dans lequel les moyens qui ajustent la position de la plate-forme et les moyens qui rangent et qui empilent les unités de fret (24) à l'intérieur de l'enceinte (3) comprennent un processeur muni de PLC (contrôle logique programmable) qui présente une pluralité d'entrées en réception de signaux indiquant: le numéro de porte, c'est-à-dire le numéro de l'enceinte du camion ou du conteneur qui doit être chargée; la position longitudinale de l'enceinte; l'alignement du système de chargement et de l'enceinte; la configuration du démarrage et ensuite la progression du cycle de chargement, lesdits signaux étant traités de telle sorte qu'on obtienne des signaux de sortie convenables pour surveiller et pour contrôler le fonctionnement d'une pluralité de moteurs, pour régler les vitesses des moteurs, et pour piloter le fonctionnement de soupapes solénoïdes (7) associées avec un ou plusieurs blocs d'alimentation hydraulique (17) qui produisent le mouvement au moins d'un desdits élévateurs hydrauliques (16).

6. Un système comme celui défini dans la revendication 1, dans lequel lesdits moyens pour ajuster la position de la plate-forme comprennent une pluralité de cylindres hydrauliques (5) qui fonctionnent indépendamment l'un de l'autre, lesdits cylindres hydrauliques soulevant ou abaissant ladite plate-forme parallèlement au plan occupé à ce moment-là et incliné en relation à cela.

7. Un système comme celui défini dans la revendication 1, dans lequel lesdits moyens pour ajuster la position de la plate-forme comprennent:
- une pluralité de roues à propulsïon mécanique (2) qui servent à traverser la plate-forme parallèlement par rapport à la position dudit bord du trottoir (14);
- une pluralité de roues ou de paliers d'appui (15) et un mécanisme d'actionnement par lequel une plate-forme supérieure (41) est poussée à tourner par rapport à ladite plate-forme (1) autour d'un pivot (31) qui passe à travers lesdites plates-formes (1, 41) dans une position centrale près de l'extrémité présentée au seuil de l'enceinte.

8. Un système comme celui défini dans la revendication 1, qui comprend en plus une pièce d'entretoise (33) qui peut tourner sur des charnières (9), ledit moyen d'entretoise reliant une plate-forme supérieure (41) avec le seuil du pont de chargement (32) de l'enceinte (3).

9. Un système comme celui défini dans la revendication 1, dans lequel lesdits moyens pour ranger et empiler les unités de fret (24) à l'intérieur de l'enceinte de chargement (3) d'un camion ou d'un conteneur comprennent au moins un élévateur hydraulique (16) monté sur des galets (34), au moins un groupe correspondant de fourches (39) pouvant se déplacer verticalement sur des supports vertivaux (40) et servant à ramasser et à positionner lesdites unités de fret (24), un premier cylindre hydraulique (12) servant à stabiliser l'élévateur (16), et un deuxième cylindre hydraulique (13) servant à positionner l'élévateur.

10. Un système comme celui défini dans les revendications précédentes, dans lequel la chaîne (29) est supportée librement par les rouleaux (38) et mise en mouvement par une paire de moteurs (30) à travers une paire correspondante de roues motrices (23) pour déplacer réciproquement ladite chaîne en directions longitudinales opposées.
